# EUROPEAN PATENT APPLICATION

(11) **EP 1 516 774 A2**
(43) Date of publication of application: **23.03.2005**
(21) Application number: 04077585.0
(22) Date of filing: 17.09.2004
(51) Int. Cl.: B60N 2/28

(54) **Child safety seat**

(30) Priority: 20.09.2003 GB 0322049
(71) Applicant: BRITAX RÖMER Kindersicherheit GmbH, D-89077 Ulm (DE)
(72) Inventor: Emmert, Erik, 89075 Ulm (DE)
(74) Representative: Brooks, Nigel Samuel

(57) **Abstract**

A child safety seat comprises a base member (10) mounted on a vehicle seat (12) and secured in place in a conventional manner by the lap and shoulder portions (14) and (16) of the strap of the vehicle's adult seat belt. A child support in the child seat comprises a child support squab (18), which is attached to the base member (10), and a child support back (20), which is pivotally connected to the squab (18) about by a pivot axis (22) and shown in a forward folded position.

## Description

The present invention relates to a child safety seat for use in a vehicle, particularly though not exclusively a passenger vehicle.

The child safety seat with which the invention is concerned is of the type adapted to be secured to a vehicle's adult seat by its adult seat belt and comprises:
- a child support as such, having:
   - a child support squab,
   - a child support back,
- an actuating formation and
- strap deflecting means,
- a generally L shaped base adapted to rest on the vehicle seat and having:
   - a squab portion for resting on a squab of the adult seat with the support squab above it,
   - a back portion for abutting against the back of the adult seat with the child support back in front of it and
   - guide means defining a strap path for the adult seat belt;
the arrangement being such that movement in a tightening direction of the actuating formation relative to the base causes movement of the strap deflecting means between a first position clear of the strap path and a second position in which a strap following the strap path is deflected therefrom, thereby tightening the strap.

Our prior European patent No. 0822115 disclosed a seat of this type in which the actuating formation is integral with the seat assembly. Angular movement of the child support requires a relatively high force due to the friction between the strap and the strap deflecting means. In order to reduce this force, our European patent No. 1077152 disclosed a child safety seat of this type in which the strap deflecting means comprises a lever pivotally mounted on the base for angular movement about a transverse pivot axis, and the child support is coupled to the lever so that angular movement of the child support towards a normal use position causes angular movement of the lever to deflect the strap from the strap path.

Both of the above child safety seats require the entire child support to move relative to the base.

It is an object of the present invention to reduce the size, and therefore the weight, of the part of the child safety seat that has to be move in order to tighten the adult seat belt strap.

According to the invention, in a child safety seat of the type defined above, wherein:
- a fixed one of the child support squab and the child support back is fixedly attached to the base member,
- the other, pivotal one is pivotally attached to the base member or to the fixed one,
- the actuating formation is integral with the pivotal one and
- means is provided for latching the pivotal one in its use position with the strap tensioned.

Whilst it can be envisaged that the pivotal one is the child support squab; in the preferred embodiments, the pivotal one is the child support back. Further in the preferred embodiments, the child support back is pivotally attached to the child support squab.

Preferably the latching means is provided at a high position in the child support back and the back portion of the base.

In one embodiment, the actuating formation is integral with the strap deflecting means. In another, the actuating formation is arranged to engage with a separate strap deflecting member.

To help understanding of the invention, a specific embodiment thereof will now be described by way of example and with reference to the accompanying drawings, in which:
Figure 1 is a perspective view from one side of a first child safety seat in accordance with the invention with the strap deflecting means in its disengaged position;
Figure 2 is a perspective view of the seat shown in Figure 1, from the opposite side;
Figure 3 is a fragmentary side view, corresponding to Figure 2, but showing the strap deflecting means in its engaged position;
Figure 4 is a rear view of the seat shown in Figure 1, with the strap deflecting means in its engaged position;
Figure 5 is a perspective view from one side view, similar to Figure 1, of a second child safety seat in accordance with the invention;
Figure 6 is a fragmentary side view of the seat shown in Figure 5, showing the strap deflecting means in its engaged position; and
Figure 7 is a rear view of the seat shown in Figures 5 and 6.

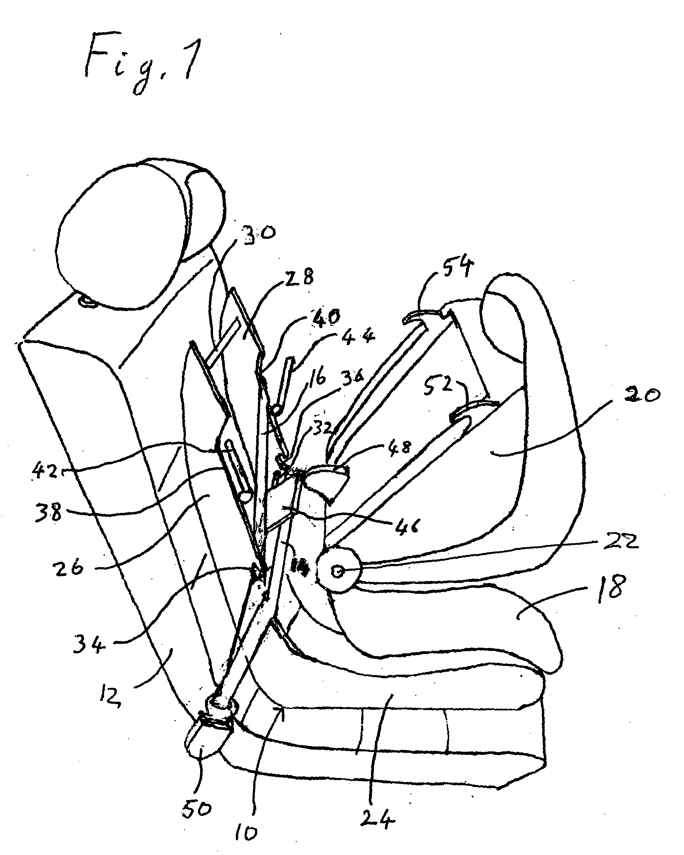

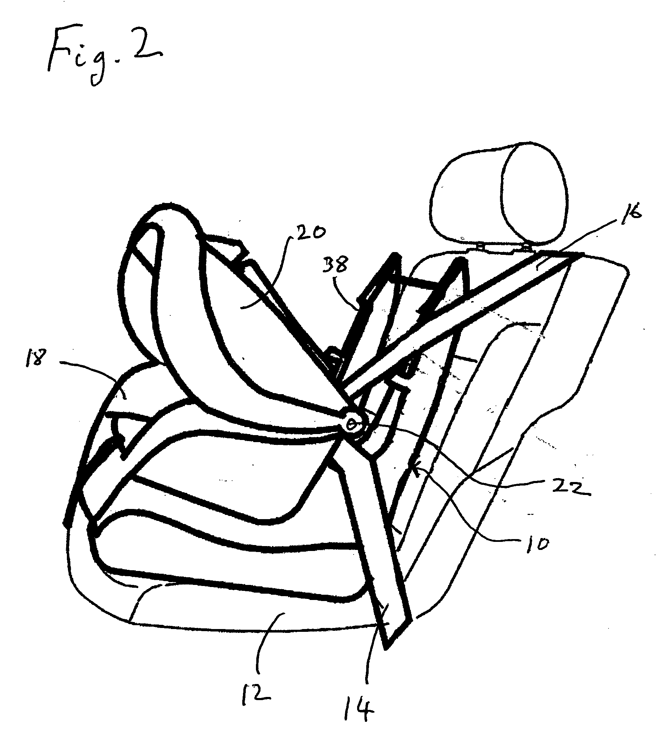

Referring to Figures 1 and 2, a child safety seat of the invention comprises a base member 10 mounted on a vehicle seat 12 and secured in place by the lap and shoulder portions 14 and 16 of the strap of the vehicle's adult seat belt. A child support in the child seat comprises a child support squab 18, which is attached to the base member 10, and a child support back 20, which is pivotally connected to the squab 18 about by a pivot axis 22 and shown in a forward folded position.

The base member 10 consists of a central, generally horizontal squab portion 24, extending below the child support squab 18, and a back portion having two L-shaped side members 26 and 28, with feet integral with the squab portion 24 and stems extending upwardly from opposite sides of the squab portion 24. The side members 26 and 28 are interconnected both by an upper bar 30 and by a pivot rod 32. Each side member 26, 28 has a lap belt guide 34, 36 below the pivot axis 22 and a shoulder belt guide 38, 40 between the pivot rod 32 and the upper bar 30. Each shoulder belt guide 38, 40 incorporates a clamp 42, 44 for preventing movement of the adult seat belt relative to them once clamped. For the side of the car shown, the lap belt guides 34 and 36 and the shoulder belt guide 40 are engaged by the lap and shoulder straps 14 and 16 of the vehicle seat belt. The other shoulder belt guide 38 is provided for use when the child safety seat is used on the other side of the car.

A belt deflector 46 projects radially from its pivot rod 32 and is shown in Figure 1 in a position just above the path of the lap strap 14 between the lap belt guides 34 and 36. A projection 48 extends rearwardly from the back of the child support back 20 to a position just above and in front of the belt deflector 46 - in the folded forwards position of the back 20 - so as to allow clearance for the lap strap 14 to pass therebetween as it is fitted round the lap belt guides 34 and 36.

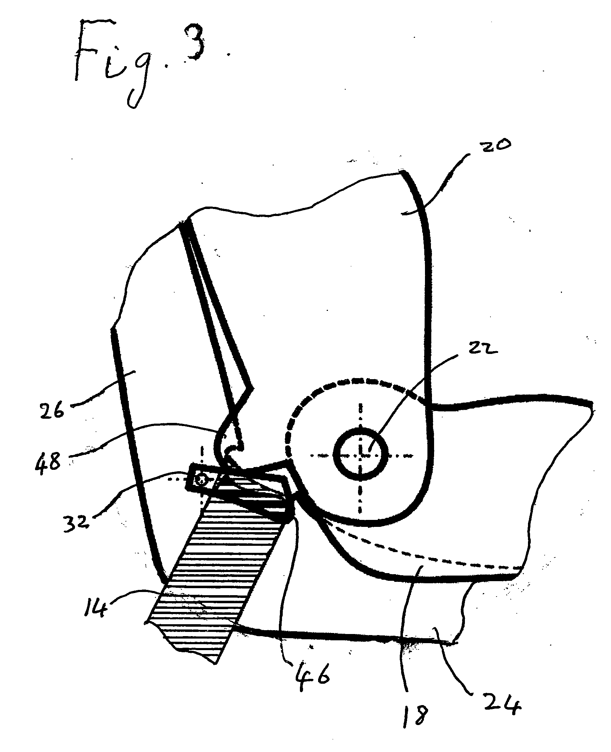

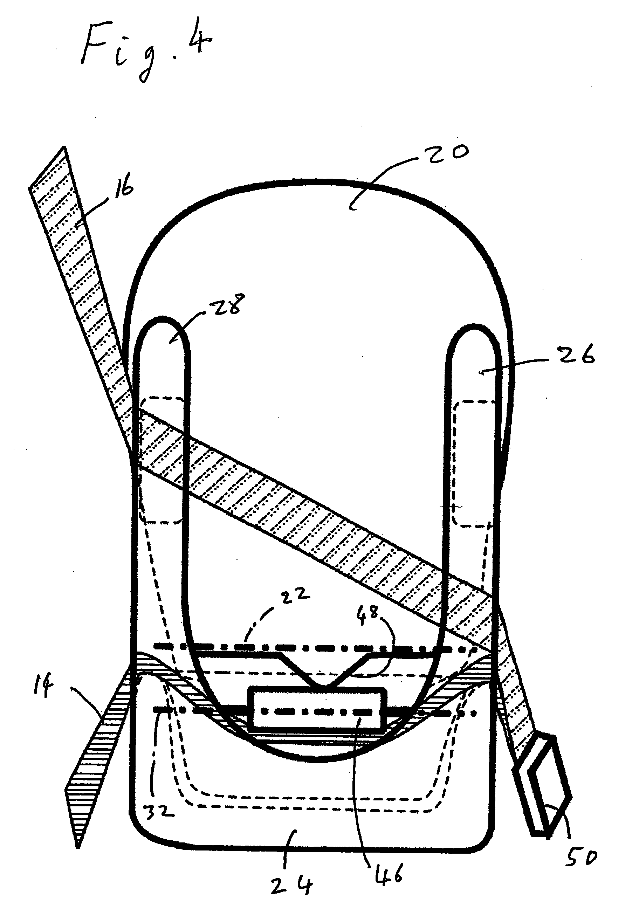

After the child safety seat has been positioned on the adult seat the adult belt has been passed over the based member and buckled as shown in Figures 1 and 2, the clamp 44 is secured so as to prevent slack from the shoulder strap 16 from feeding through the seat belt buckle 50 to the lap strap 14. Next, the child support back 20 is pivoted rearwardly so that the projection 48 engages with the radially outer end of the belt deflector 46, causing it to pivot to the position shown in Figures 3 and 4, thus tightening the lap strap 14 by deflecting it from its direct path between the lap belt guides 34 and 36. The back 20 is retained in this position by engagement of hook formations 52 and 54 thereon with latches (not shown) on the L members 26 and 28.

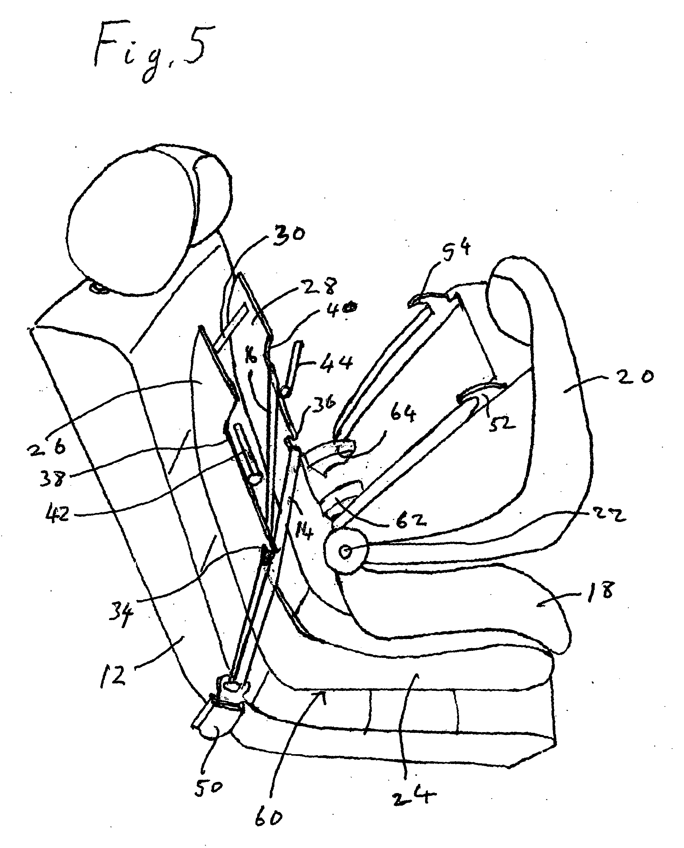

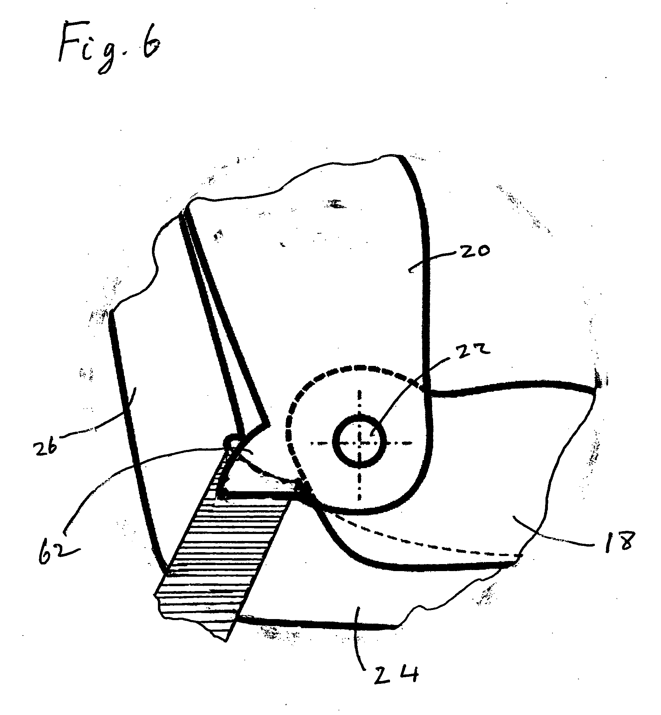

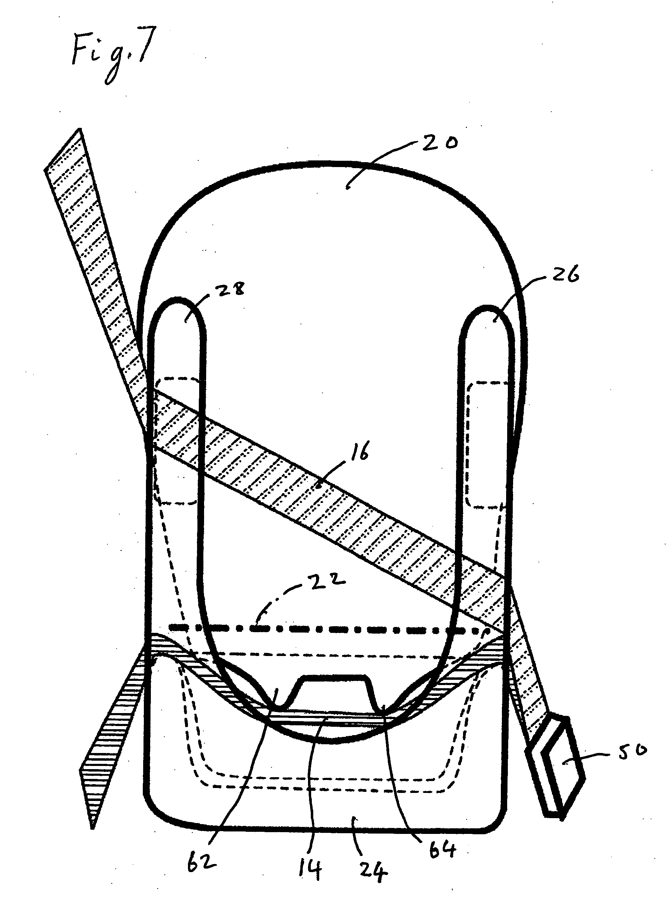

Figures 5 to 7 show another child safety seat 60 of the invention, most of the parts of which are identical with the corresponding parts of the seat 10 shown in Figures 1 to 4, are denoted by the same reference numerals and will not be described again in detail. However, there is no belt deflector 46. Instead, the single central projection 46 on the back of the child support back 20 is replaced by two projections 62 and 64 spaced apart so that, when the support back 20 is moved from the position shown in Figure 5 to the position shown in Figures 6 and 7, both projections 62 and 64 engage with the lap strap 14 between the two lap belt guides 34 and 36, thus tightening the lap strap 14 by deflecting it from its direct path between the lap belt guides 34 and 36. As before, the support back 20 is retained in this position by engagement of hook formations 52 and 54 thereon with latches (not shown) on the L members 26 and 28.

## Claims

1. A child safety seat of the type to be secured to a vehicle's adult seat by its adult seat belt and comprising:
• a child support as such, having:
• a child support squab,
• a child support back,
• an actuating formation and
• strap deflecting means,
• a generally L shaped base adapted to rest on the vehicle seat and having:
• a squab portion for resting on a squab of the adult seat with the support squab above it,
• a back portion for abutting against the back of the adult seat with the child support back in front of it and
• guide means defining a strap path for the adult seat belt;
the arrangement being such that movement in a tightening direction of the actuating formation relative to the base causes movement of the strap deflecting means between a first position clear of the strap path and a second position in which a strap following the strap path is deflected therefrom, thereby tightening the strap;
**characterised in that**:
• a fixed one of the child support squab and the child support back is fixedly attached to the base member,
• the other, pivotal one is pivotally attached to the base member or to the fixed one,
• the actuating formation is integral with the pivotal one and
• means is provided for latching the pivotal one in its use position with the strap tensioned.

2. A child safety seat as claimed in claim 1, wherein the pivotal one is the child support squab.

3. A child safety seat as claimed in claim 1, wherein the pivotal one is the child support back.

4. A child safety seat as claimed in claim 1, claim 2 or claim 3, wherein the child support back is pivotally attached to the child support squab.

5. A child safety seat as claimed in claim 3 or claim 4, wherein the latching means is provided at a high position in the child support back and the back portion of the base.

6. A child safety seat as claimed in any preceding claim, wherein the actuating formation is integral with the strap deflecting means.

7. A child safety seat as claimed in any one of claims 1 to 5, wherein the actuating formation is arranged to engage with a separate strap deflecting member.

8. A child safety seat as claimed in claim 3 or any one of claims 4 to 7 as appendant to claim 3, wherein the base comprises two upwards extending side members and an upper bar interconnecting the side members, the strap guides being provided on the side members.

9. A child safety seat as claimed in claim 8, wherein the strap guides comprise lap strap guides and the strap deflecting means acts therebetween.

10. A child safety seat as claimed in claim 8 as appendant to claim 6 or claim 7, wherein the actuating formation is a formation on the rear of the child support back.

11. A child safety seat as claimed in claim 10 as appendant to claim 9, wherein the actuating strap deflecting member is a deflector pivotally carried between the two side members.

12. A child safety seat as claimed in any one of claims 8 to 11, including an upper shoulder strap clamp.
